# EUROPÄISCHE PATENTSCHRIFT

(11) **EP 3 047 300 B1**
(45) Veröffentlichungstag und Bekanntmachung des Hinweises auf die Patenterteilung: **02.09.2020**
(21) Anmeldenummer: 14761995.1
(22) Anmeldetag: 10.09.2014
(51) Int. Cl.: G01S 15/93, G01S 7/52, G01S 15/87, G01S 15/931

(54) **VERFAHREN ZUM ERKENNEN EINES BLOCKIERTEN ZUSTANDS EINES ULTRASCHALLSENSORS, ULTRASCHALLSENSORVORRICHTUNG UND KRAFTFAHRZEUG**
METHOD FOR RECOGNIZING A BLOCKED STATE OF AN ULTRASONIC SENSOR, ULTRASONIC SENSOR DEVICE AND MOTOR VEHICLE
PROCÉDÉ PERMETTANT DE DÉTECTER UN ÉTAT DE BLOCAGE D'UN CAPTEUR D'ULTRASONS, CAPTEUR D'ULTRASONS ET VÉHICULE AUTOMOBILE

(30) Priorität: 17.09.2013 DE 102013015410
(43) Veröffentlichungstag der Anmeldung: 27.07.2016
(73) Patentinhaber: Valeo Schalter und Sensoren GmbH, 74321 Bietigheim-Bissingen (DE)
(72) Erfinder: HALLEK, Michael, 74321 Bietigheim-Bissingen (DE); LUDWIG, Michael, 68159 Mannheim (DE)
(74) Vertreter: Enge, Sebastian
(86) Internationale Anmeldenummer: PCT/EP2014/069305
(87) Internationale Veröffentlichungsnummer: WO 2015/039941

(56) Entgegenhaltungen:
- DE-A1-102009 040 992
- US-A1- 2002 023 498
- US-A1- 2007 157 728

## Beschreibung

Die Erfindung betrifft ein Verfahren zum Erkennen eines blockierten Zustands eines Ultraschallsensors eines Kraftfahrzeugs, wobei ein Istwert zumindest eines Schwingungsparameters des Ultraschallsensors erfasst und zum Erkennen des blockierten Zustands mittels einer Auswerteeinrichtung mit einem Referenzwert verglichen wird. Die Erfindung betrifft außerdem eine Ultraschallsensorvorrichtung für ein Kraftfahrzeug, welche zum Durchführen eines solchen Verfahrens ausgebildet ist, sowie ein Kraftfahrzeug mit einer derartigen Ultraschallsensorvorrichtung.

Verfahren zum Erkennen eines blockierten Zustands eines Ultraschallsensors sind bereits aus dem Stand der Technik wie z.B. der US 2002/023498 A1, bekannt. Es geht dabei um die Erkennung einer Situation, in welcher der Ultraschallsensor durch eine zusätzliche Masse, etwa durch Schmutz und/oder Schnee und/oder Eis, verdeckt ist. Da Ultraschallsensoren heutzutage immer häufiger auch außerhalb der eigentlichen Parkhilfefunktionalität eingesetzt werden, wie beispielsweise zur Fahrunterstützung mit aktiven Bremseingriffen aufgrund einer detektierten Kollisionsgefahr, soll im Betrieb des Kraftfahrzeugs sichergestellt werden, dass die am Kraftfahrzeug vorhandenen Ultraschallsensoren die in der Umgebung des Kraftfahrzeugs befindlichen Hindernisse sicher erkennen bzw. die Abstände auch zuverlässig bis zu einer vorbestimmten Rechweite erfassen können. Sind die Ultraschallsensoren mit einer zusätzlichen Masse verdeckt, soll dies zuverlässig detektiert werden. Die bekannten Verfahren zur Erkennung von Eis oder Schmutz basieren grundsätzlich auf der Auswertung von Nebeneffekten, welche durch die zusätzliche Masse an dem Ultraschallsensor verursacht werden. So wird durch eine zusätzliche Masse beispielsweise die so genannte Ausschwingzeit der Membran des Ultraschallsensors beeinflusst oder es wird ein virtuelles Echo bzw. ein Scheinecho generiert, was durch entsprechende Auswertung des elektrischen Empfangssignals des Ultraschallsensors detektiert werden kann. Es kann jedoch im ungünstigsten Falle auch vorkommen, dass die zusätzliche Masse weder zu einer Änderung der Ausschwingzeit der Membran führt noch zusätzliche Echos verursacht. In solchen Situationen kann der blockierte Zustand des Ultraschallsensors nicht detektiert werden, und der Sensor ist nicht mehr in der Lage, ein reales Objekt zu detektieren bzw. die Abstände zuverlässig zu erfassen.

Um den blockierten Zustand des Ultraschallsensors auch in solchen ungünstigen Situationen erkennen zu können, wird im Stand der Technik bereits ein Verfahren vorgeschlagen, bei welchem eine Plausibilisierung dahingehend vorgenommen wird, dass der Ultraschallsensor in einen Überprüfungsmodus geschaltet wird, in welchem die Empfindlichkeit des Ultraschallsensors im Vergleich zum Normalbetrieb deutlich erhöht wird. In diesem Überprüfungsmodus wird überprüft, ob der Ultraschallsensor so genannte Bodenreflexionen oder Reflexionen an anderen Objekten empfangen kann, welche im Normalbetrieb üblicherweise aufgrund der geringeren Empfindlichkeit ausgeblendet werden. Der Nachteil eines solchen Überprüfungsmodus besteht jedoch darin, dass der Ultraschallsensor für eine bestimmte Zeitdauer für die eigentlichen Messungen nicht zur Verfügung steht und es somit zu einer zeitlichen Verzögerung der Verfügbarkeit des Sensors kommt.

Eine gewisse Abhilfe schafft hier ein alternatives Verfahren, wie es in dem Dokument DE 102 47 971 A1 beschrieben ist. Es wird hier die Eigenfrequenz bzw. Resonanzfrequenz des Ultraschallsensors gemessen und mit abgelegten Referenzwerten verglichen. Dieses Verfahren basiert auf der Tatsache, dass die Resonanzfrequenz des Ultraschallsensors ein direkter Indikator für eine Verschmutzung, Eis- oder Schneeschicht ist, da diese zusätzliche Schicht die Masse der harmonischen Schwingung beeinflusst. Mit der zusätzlichen Masse der Verschmutzung bzw. der Eis- oder Schneeschicht ändert sich nämlich auch die schwingende Masse und folglich auch die Resonanzfrequenz des Sensors.

Um einen mit Schmutz und/oder Eis und/oder Schnee verdeckten Zustand eines Ultraschallsensors erkennen zu können, schlägt die DE 10 2009 040 992 A1 vor, die Ausschwingfrequenz des Ultraschallsensors im Anschluss an eine Anregung der Membran zu erfassen und mit der Anregefrequenz zu vergleichen. Abhängig von dem Ergebnis dieses Vergleichs wird festgestellt, ob der Ultraschallsensor blockiert ist oder nicht.

Weiterhin beschreibt die DE 10 2010 021 960 A1 ein Verfahren, bei welchem zur Erkennung des blockierten Zustands eines Ultraschallsensors die Ausschwingzeit der Membran über mehrere Messzyklen des Ultraschallsensors hinweg ausgewertet wird. Eine weitere Plausibilisierung kann hier darin bestehen, dass die Erkennung des blockierten Zustands nur unter der Voraussetzung erfolgt, dass eine Temperatur der Umgebung des Kraftfahrzeugs unterhalb eines vorgegebenen Grenzwerts liegt. Dieser Grenzwert kann beispielsweise 0°C betragen. Somit kann die Fehlerrate bei der Erkennung des blockierten Zustands reduziert werden.

Es ist Aufgabe der Erfindung, eine Lösung aufzuzeigen, wie bei einem Verfahren der eingangs genannten Gattung der blockierte Zustand des Ultraschallsensors besonders zuverlässig detektiert werden kann.

Diese Aufgabe wird erfindungsgemäß durch ein Verfahren, durch eine Ultraschallsensorvorrichtung sowie durch ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung und der Figuren.

Ein erfindungsgemäßes Verfahren dient zum Erkennen eines blockierten Zustands eines Ultraschallsensors eines Kraftfahrzeugs. Unter dem blockierten Zustand wird ein durch eine zusätzliche Masse verdeckter Zustand verstanden, wie insbesondere ein durch Eis und/oder Schnee und/oder Schmutz verdeckter Zustand des Ultraschallsensors. Es wird ein Istwert zumindest eines Schwingungsparameters des Ultraschallsensors erfasst, wie beispielsweise der Istwert einer Resonanzfrequenz und/oder der Istwert einer Ausschwingzeit und/oder der Istwert einer Schwingungsamplitude. Der Istwert des Schwingungsparameters wird mittels einer elektronischen Auswerteeinrichtung mit einem Referenzwert verglichen, und abhängig von diesem Vergleich wird überprüft, ob der Ultraschallsensor blockiert ist oder nicht. Erfindungsgemäß ist vorgesehen, dass mittels einer Temperaturerfassungseinrichtung des Kraftfahrzeugs eine aktuelle Temperatur erfasst wird, welcher der Ultraschallsensor ausgesetzt ist, und der Referenzwert mittels der Auswerteeinrichtung abhängig von der aktuellen Temperatur bestimmt und somit im Betrieb festgelegt bzw. eingestellt wird.

Die Erfindung basiert auf der Erkenntnis, dass der blockierte Zustand eines Ultraschallsensors durch Auswertung eines Schwingungsparameters grundsätzlich zuverlässig detektiert werden kann und insbesondere die Resonanzfrequenz des Sensors ein zuverlässiges Maß für eine zusätzliche Masse an der Membran darstellt, dass jedoch im Stand der Technik die Auswertung der Resonanzfrequenz in manchen Situationen lediglich zu unzureichenden Ergebnissen führt. Eine weitere Erkenntnis besteht darin, dass die unzureichenden Ergebnisse darauf zurückzuführen sind, dass es auch zusätzliche Faktoren gibt, welche die Resonanzfrequenz und andere Schwingungsparameter des Ultraschallsensors beeinflussen. Und zwar verschiebt sich die Resonanzfrequenz des Ultraschallsensors auch aufgrund einer Veränderung der Temperatur, welche durch eine Temperaturabhängigkeit der Materialsteifigkeit (Elastizitätsmodul) der Membran selbst und/oder der angrenzenden Bauteile auftreten kann. Um diese Veränderung des Schwingungsparameters aufgrund der Temperaturabhängigkeit der Materialsteifigkeit zu kompensieren, wird der Referenzwert, mit welchem der aktuelle Istwert des Schwingungsparameters des Ultraschallsensors verglichen wird, in Abhängigkeit von der aktuellen Temperatur eingestellt, welcher der Ultraschallsensor momentan ausgesetzt ist. Auf diese Art und Weise kann der blockierte Zustand des Ultraschallsensors besonders zuverlässig erkannt werden, und es können gegebenenfalls entsprechende Sicherheitsmaßnahmen getroffen werden, wie beispielsweise Ausgabe einer Warnmeldung an den Fahrer und/oder Deaktivierung zumindest eines Fahrerassistenzsystems in dem Kraftfahrzeug.

Bei dem Ultraschallsensor kann es sich einerseits um einen Sensor handeln, dessen Membran in einer durchgängigen Aussparung eines Verkleidungsteils, beispielsweise eines Stoßfängers, des Kraftfahrzeugs angeordnet ist und somit von außerhalb des Kraftfahrzeugs sichtbar ist. Zum anderen kann alternativ auch vorgesehen sein, dass der Ultraschallsensor an einer Rückseite des Verkleidungsteils so angeordnet ist, dass die Membran an der Rückseite des Verkleidungsteils anliegt und die Ultraschallsignale durch das Material des Verkleidungsteils hindurch aussendet und empfängt. Gerade bei einer solchen verdeckten und von außen unsichtbaren Anordnung des Ultraschallsensors an dem Verkleidungsteil ist die Veränderung der Schwingungsparameter bzw. der Schwingungseigenschaften des Ultraschallsensors aufgrund der Temperaturabhängigkeit der Materialsteifigkeit besonders signifikant.

Die Auswerteeinrichtung ist bevorzugt ein zentrales Steuergerät, mittels welchem mehrere Ultraschallsensoren des Kraftfahrzeugs angesteuert werden. Dieses Steuergerät kann beispielsweise zur Ansteuerung einer Gruppe von Ultraschallsensoren dienen, welche an einem Stoßfänger angeordnet sind. Es kann sich aber auch um ein Steuergerät handeln, welches gemeinsam für alle Ultraschallsensoren ist, welche am vorderen und am hinteren Stoßfänger angeordnet sind.

Es wird also eine aktuelle Temperatur erfasst, welcher der Ultraschallsensor ausgesetzt ist. Hinsichtlich der Erfassung der Temperatur mittels der Temperaturerfassungseinrichtung können nun unterschiedliche Ausführungsformen vorgesehen sein:
Zum einen kann die aktuelle Temperatur unmittelbar am und/oder im Sensor gemessen werden. Dies bedeutet, dass die aktuelle Temperatur mittels eines an und/oder in dem Ultraschallsensor bzw. an und/oder in einem Gehäuse des Ultraschallsensors angeordneten Temperatursensors der Temperaturerfassungseinrichtung erfasst wird. Diese Ausführungsform basiert auf der Erkenntnis, dass die Messung einer Umgebungstemperatur des Kraftfahrzeugs selbst nicht immer die tatsächliche Temperatur widerspiegelt, welcher der Sensor ausgesetzt ist. Dies ist sehr häufig der Fall, wenn ein Sensor in der Nähe einer Wärmequelle platziert wird, wie zum Beispiel sehr nahe an einer Auspuffanlage bzw. am Abgasstrom. Die Temperatur direkt am Sensor weicht dann deutlich von der Umgebungstemperatur des Kraftfahrzeugs ab. Die Erfassung der Temperatur unmittelbar am und/oder im Ultraschallsensor ermöglicht somit eine sehr präzise Bestimmung des Referenzwerts und folglich eine besonders zuverlässige Erkennung des blockierten Zustands des Ultraschallsensors.

Zum anderen kann als Temperatur auch eine aktuelle Umgebungstemperatur des Ultraschallsensors mittels eines im Bereich bzw. in unmittelbarer Nähe des Ultraschallsensors angeordneten Temperatursensors der Temperaturerfassungseinrichtung erfasst werden. Dieser Temperatursensor ist bevorzugt in unmittelbarer Nähe des Ultraschallsensors angeordnet, nämlich in einem Abstand von maximal 10 bis 20 cm. Auch dies ermöglicht eine präzise Bestimmung des Referenzwerts im Betrieb.

Vorzugsweise wird der Istwert einer Resonanzfrequenz des Ultraschallsensors als Schwingungsparameter erfasst. Dann kann als Referenzwert für die Resonanzfrequenz ein Sollwert der Resonanzfrequenz abhängig von der aktuellen Temperatur bestimmt werden. Mit anderen Worten wird dabei eine theoretische Resonanzfrequenz (Sollwert der Resonanzfrequenz) auf der Basis der gemessenen Temperatur ermittelt. Die Abhängigkeit der theoretischen Resonanzfrequenz von der gemessenen Temperatur kann hier beispielsweise als Formel oder aber in Form einer Look-Up-Tabelle in der Auswerteeinrichtung abgelegt sein und dient dann zur Ermittlung des Sollwerts der Resonanzfrequenz. Bei der Überprüfung des Ultraschallsensors auf den blockierten Zustand hin wird somit der Sollwert der Resonanzfrequenz mit dem tatsächlich gemessenen Istwert der Resonanzfrequenz als Schwingungsparameter verglichen. Bei der Resonanzfrequenz handelt es sich vorzugsweise um eine Resonanzfrequenz der Membran bei einem Ausschwingen der Membran, d.h. unmittelbar im Anschluss an ein Anregen der Membran, beispielsweise mittels eines Piezoelements. Die Auswertung der Resonanzfrequenz bzw. der Eigenfrequenz hat sich als besonders vorteilhaft im Hinblick auf die Erkennung einer zusätzlichen Masse an der Membran und somit hinsichtlich der Detektion eines verdeckten Zustands des Ultraschallsensors erwiesen.

Ergänzend oder alternativ kann jedoch auch vorgesehen sein, dass als Schwingungsparameter des Ultraschallsensors eine Ausschwingzeit der Membran verwendet wird. Bei dieser Ausführungsform wird der Istwert der Ausschwingzeit als Schwingungsparameter erfasst, und als Referenzwert für die Ausschwingzeit wird ein Sollwert der Ausschwingzeit abhängig von der aktuellen Temperatur bestimmt. Unter der Ausschwingzeit wird dabei eine Nachschwingzeitdauer verstanden, für welche ein Nachschwingen der Membran im Anschluss an eine Anregung erfolgt. Es hat sich nämlich herausgestellt, dass sich auch diese Ausschwingzeit abhängig von der Temperatur des Ultraschallsensors verändern kann und außerdem durch eine zusätzliche Masse an der Membran beeinflusst wird. Auch diese Ausführungsform ermöglicht somit - gegebenenfalls in Verbindung mit der Auswertung der Resonanzfrequenz - zuverlässige Rückschlüsse auf den blockierten bzw. verdeckten Zustand des Ultraschallsensors.

Ergänzend oder alternativ kann auch vorgesehen sein, dass als Schwingungsparameter des Ultraschallsensors eine Schwingungsamplitude der Membran verwendet wird. Bei dieser Ausführungsform wird der Istwert der Amplitude als Schwingungsparameter erfasst, und als Referenzwert für die Amplitude wird ein Sollwert der Amplitude abhängig von der aktuellen Temperatur bestimmt. Bei der Schwingungsamplitude handelt es sich vorzugsweise um eine Amplitude der Membranschwingung bei einem Ausschwingen der Membran, d.h. unmittelbar im Anschluss an eine Anregung der Membran

Vorzugsweise wird der Vergleich zwischen dem jeweils aktuellen Istwert des Schwingungsparameters und dem jeweils aktuellen Referenzwert wiederholt durchgeführt. Sowohl die Messung des Schwingungsparameters als auch die Erfassung der Sensortemperatur können also wiederholt, beispielsweise periodisch, durchgeführt werden. Abhängig von den Messwerten der Sensortemperatur kann jeweils ein aktueller Referenzwert für den Vergleich mit dem Istwert des Schwingungsparameters bestimmt werden. Vorzugsweise ist dann vorgesehen, dass aus Vergleichsergebnissen, wie beispielsweise aus einer vorbestimmten Anzahl von Vergleichen, ein Mittelwert bestimmt wird und dieser Mittelwert dann zum Erkennen des blockierten Zustands ausgewertet wird. Es wird somit ein Mittelwert über mehrere Messungen berechnet. Dies hat den Vorteil, dass kurzfristige Schwankungen der Resonanzfrequenz und/oder der Sensortemperatur herausgefiltert werden können. Solche Schwankungen der Resonanzfrequenz können dabei beispielsweise aufgrund einer sehr kurz anhaftenden Verschmutzung auftreten. Solche kurzen Verschmutzungen können beispielsweise Kieselsteine, Laub oder sonstiges Material sein, welches unmittelbar nach dem Auftreffen wieder herunterfällt bzw. vom Fahrtwind weiter weggeweht wird.

Wird ein blockierter Zustand des Ultraschallsensors detektiert, so wird abhängig von dem Vergleich zwischen dem Istwert des Schwingungsparameters und dem Referenzwert auch ein Ausmaß und/oder eine Art bzw. eine Ursache der Blockierung des Ultraschallsensors bestimmt Es wird dabei eine Abweichung bzw. eine Differenz zwischen dem Istwert des Schwingungsparameters einerseits und dem aktuellen Referenzwert andererseits bestimmt und als direkter Indikator für die Art der Blockierung und/oder die Stärke der Blockierung genutzt. Diese Ausführungsform erweist sich insbesondere dann als vorteilhaft, wenn auf der Grundlage von Messwerten des Ultraschallsensors mehrere Funktionalitäten im Kraftfahrzeug bereitgestellt werden bzw. diese Messwerte durch mehrere Fahrerassistenzsysteme genutzt werden, wie beispielsweise durch eine Einparkhilfe, ein automatisches Bremsassistenzsystem und dergleichen. Abhängig von der erkannten Art und/oder dem Ausmaß der Blockierung können dann beispielsweise einzelne der Funktionalitäten bzw. der Assistenzsysteme abgeschaltet werden.

Dies kann auch so aussehen, dass abhängig von dem Vergleich, und insbesondere abhängig von dem ermittelten Ausmaß und/oder der Art der Blockierung, eine durch die Blockierung verursachte Verringerung eines Erfassungsbereichs, insbesondere der Reichweite, des Ultraschallsensors gegenüber einem Referenzerfassungsbereich eines nicht-blockierten Ultraschallsensors bestimmt wird. Ist die Verringerung des Erfassungsbereichs und somit der aktuell zur Verfügung stehende Erfassungsbereich des Ultraschallsensors bekannt, so kann somit beurteilt werden, welche Fahrerassistenzsysteme bzw. Funktionalitäten im Kraftfahrzeug noch bei diesem aktuellen Erfassungsbereich des Ultraschallsensors genutzt werden können und welche nicht. Es kann somit eine Beurteilung zu jedem Fahrerassistenzsystem separat bzw. einzeln durchgeführt werden, und einzelne Fahrerassistenzsysteme können gegebenenfalls abgeschaltet werden und/oder es können Warnmeldungen zu einzelnen Funktionalitäten ausgegeben werden. Eine gewisse Verringerung des Erfassungsbereichs bzw. der Reichweite des Ultraschallsensors kann beispielsweise für die Funktionalität einer Einparkhilfe akzeptiert werden, nicht jedoch für das Fahrerassistenzsystem, welches zum automatischen Abbremsen des Kraftfahrzeugs nach der Detektion einer Kollisionsgefahr dient, oder aber für ein automatisches Parkassistenzsystem, welches zur Vermessung von Parklücken und zur automatischen Berechnung einer Parktrajektorie für das Kraftfahrzeug dient. Es können auch systemspezifische Warnmeldungen für die einzelnen Fahrerassistenzsysteme erzeugt werden.

Vorzugsweise werden zumindest zwei Ultraschallsensoren des Kraftfahrzeugs jeweils auf den blockierten Zustand hin überprüft. Um gegebenenfalls vorhandene Unterschiede in der Temperatur der Ultraschallsensoren berücksichtigen zu können, ist in einer Ausführungsform vorgesehen, dass die aktuelle Temperatur separat für jeden Ultraschallsensor erfasst wird und der Referenzwert separat für jeden Ultraschallsensor abhängig von der jeweiligen Temperatur im Betrieb bestimmt wird. Ein Temperaturgefälle zwischen mehreren Ultraschallsensoren kann somit individuell betrachtet werden, weil zu jedem Ultraschallsensor die Temperatur gemessen wird, welcher der jeweilige Ultraschallsensor ausgesetzt ist.

Die Erfindung betrifft außerdem eine Ultraschallsensorvorrichtung für ein Kraftfahrzeug, umfassend einen Ultraschallsensor und eine Auswerteeinrichtung, welche einen Istwert zumindest eines Schwingungsparameters des Ultraschallsensors erfasst, mit einem Referenzwert vergleicht und abhängig von dem Vergleich einen blockierten Zustand des Ultraschallsensors erkennt. Die Auswerteeinrichtung kann den Referenzwert abhängig von einer erfassten aktuellen Temperatur bestimmen, welcher der Ultraschallsensor ausgesetzt ist.

Ein erfindungsgemäßes Kraftfahrzeug, insbesondere ein Personenkraftwagen, umfasst eine erfindungsgemäße Ultraschallsensorvorrichtung.

Die mit Bezug auf das erfindungsgemäße Verfahren vorgestellten bevorzugten Ausführungsformen und deren Vorteile gelten entsprechend für das erfindungsgemäße Kraftfahrzeug und die erfindungsgemäße Ultraschallsensorvorrichtung.

Weitere Merkmale der Erfindung ergeben sich aus den Ansprüchen, den Figuren und der Figurenbeschreibung. Alle vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder aber in Alleinstellung verwendbar.

Die Erfindung wird nun anhand eines bevorzugten Ausführungsbeispiels sowie unter Bezugnahme auf die beigefügten Zeichnungen näher erläutert.

Es zeigen:
- Fig. 1: in schematischer Darstellung ein Kraftfahrzeug mit einer Ultraschallsensorvorrichtung gemäß einer Ausführungsform der Erfindung;
- Fig. 2: eine Abhängigkeit einer Resonanzfrequenz von einer Temperatur eines Ultraschallsensors für zwei unterschiedliche Einbauarten des Ultraschallsensors am Kraftfahrzeug; und
- Fig. 3: ein Flussdiagramm eines Verfahrens gemäß einer Ausführungsform der Erfindung.

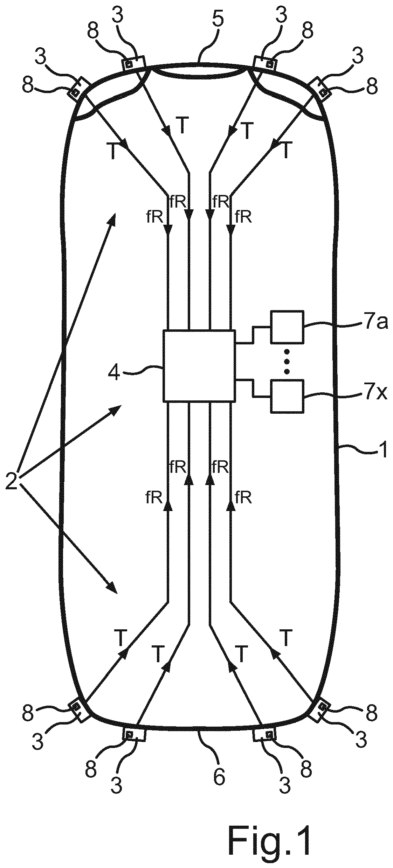

Ein in Fig. 1 dargestelltes Kraftfahrzeug 1 ist beispielsweise ein Personenkraftwagen. Das Kraftfahrzeug 1 umfasst eine Ultraschallsensorvorrichtung 2, welche eine Vielzahl von Ultraschallsensoren 3 sowie eine elektronische Auswerteeinrichtung 4 beispielsweise in Form eines Steuergeräts aufweist. Die Anzahl und die Anordnung der Ultraschallsensoren 3 sind in Fig. 1 lediglich beispielhaft dargestellt und können je nach Ausführungsform variieren. Im Ausführungsbeispiel sind eine Vielzahl von Ultraschallsensoren 3 an einem vorderen Stoßfänger 5 des Kraftfahrzeugs 1 angeordnet; eine Vielzahl von Ultraschallsensoren 3 sind auch an einem hinteren Stoßfänger 6 des Kraftfahrzeugs 1 angeordnet. Hinsichtlich der Einbauart der Ultraschallsensoren 3 können zwei alternative Ausführungsformen vorgesehen sein. Zum einen können die Ultraschallsensoren 3 jeweils in einer Aussparung des jeweiligen Stoßfängers 5, 6 angeordnet sein, sodass die Membranen der jeweiligen Ultraschallsensoren 3 innerhalb der jeweiligen durchgängigen Aussparung des Stoßfängers 5, 6 angeordnet sind. Zum anderen kann jedoch auch ein verdeckter Einbau der Ultraschallsensoren 3 hinter dem jeweiligen Stoßfänger 5, 6 vorgesehen sein, sodass die Membranen der Ultraschallsensoren 3 an der Rückseite des jeweiligen Stoßfängers 5, 6 anliegen und die Ultraschallsignale durch das Material des Stoßfängers 5, 6 hindurch aussenden und empfangen.

Die Ultraschallsensoren 3 sind jeweils zum Erfassen von Abständen zu in einer Umgebung des Kraftfahrzeugs 1 befindlichen Hindernissen ausgebildet. Die jeweils gemessenen Abstandswerte werden von den Ultraschallsensoren 3 an die zentrale Auswerteeinrichtung 4 übermittelt, welche die Messwerte der Ultraschallsensoren 3 verarbeitet. In dem Kraftfahrzeug 1 können mehrere Fahrerassistenzsysteme 7a bis 7x vorgesehen sein, welche zum Bereitstellen unterschiedlicher Funktionalitäten in dem Kraftfahrzeug 1 ausgebildet sind, und zwar anhand der gemessenen Abstände der Ultraschallsensoren 3. In Fig. 1 sind die unterschiedlichen Fahrerassistenzsysteme 7a bis 7x als separate Komponenten gezeigt; mehrere Funktionalitäten können aber auch durch ein gemeinsames Steuergerät bereitgestellt werden, welches dann die Funktion mehrerer Fahrerassistenzsysteme übernimmt. Als Fahrerassistenzsysteme 7a bis 7x können beispielsweise folgende Systeme vorgesehen sein: ein Parkhilfesystem, bei welchem die gemessenen Abstände akustisch und/oder optisch ausgegeben werden, ein automatisches Parkassistenzsystem zum automatischen Einparken, ein automatisches Bremsassistenzsystem, welches zum autonomen Bremsen des Kraftfahrzeugs 1 aufgrund einer anhand der Messwerte der Ultraschallsensoren 3 detektierten Kollisionsgefahr dient, ein System zur Totwinkelüberwachung, ein System zur Abstandshaltung, ein Kollisionserkennungssystem und dergleichen.

Die Auswerteeinrichtung 4 kann auch zu jedem Ultraschallsensor 3 separat überprüfen, ob dieser Ultraschallsensor 3 durch eine zusätzliche Masse, wie eine Verschmutzung und/oder Eis und/oder Schnee, verdeckt und somit blockiert und bei der Bereitstellung seiner Funktion verhindert ist. Zu diesem Zwecke ist bei jedem Ultraschallsensor 3 eine Temperaturerfassungseinrichtung 8 vorgesehen, welche zum Erfassen der aktuellen Temperatur T ausgebildet ist, welcher der jeweilige Ultraschallsensor 3 ausgesetzt ist. Mit anderen Worten erfasst die Temperaturerfassungseinrichtung 8 die jeweilige Sensortemperatur. Dazu umfasst jede Temperaturerfassungseinrichtung 8 einen Temperatursensor, welcher in und/oder an dem Gehäuse des jeweiligen Ultraschallsensors 3 oder aber in unmittelbarer Nähe des Ultraschallsensors 3 angeordnet ist, wie beispielsweise an einer Halterung des jeweiligen Ultraschallsensors 3. Die aktuelle Temperatur T bzw. die Temperaturmesswerte des jeweiligen Ultraschallsensors 3 werden an die zentrale Auswerteeinrichtung 4 übermittelt und durch diese ausgewertet.

Außerdem wird bei jedem Ultraschallsensor 3 eine aktuelle Resonanzfrequenz fR erfasst und an die Auswerteeinrichtung 4 übermittelt. Es handelt sich bei der Resonanzfrequenz fR um die Eigenfrequenz der jeweiligen Membran, welche abhängig von der tatsächlichen Schwingungsmasse variiert und unmittelbar nach einem Anregen der Membran gemessen wird, d.h. beim Ausschwingen der Membran. Die Resonanzfrequenz fR ist also eine Ausschwingfrequenz.

Abhängig von den empfangenen Messwerten der Temperatur T und der Resonanzfrequenz fR ermittelt die Auswerteeinrichtung 4 dann separat für jeden Ultraschallsensor 3, ob dieser Ultraschallsensor 3 aktuell blockiert ist oder nicht. Nachfolgend wird ein Verfahren zur Erkennung eines solchen blockierten Zustands eines einzelnen Ultraschallsensors 3 näher erläutert, wobei dieses Verfahren analog auch auf andere Ultraschallsensoren 3 angewendet werden kann.

An dieser Stelle sei angemerkt, dass die Erfindung nicht auf die Erfassung der Resonanzfrequenz fR als Schwingungsparameter beschränkt ist. Es können auch andere Schwingungsparameter verwendet werden, welche mit der Schwingungsmasse korreliert sind, wie beispielsweise die so genannte Ausschwingzeit und/oder die Schwingungsamplitude.

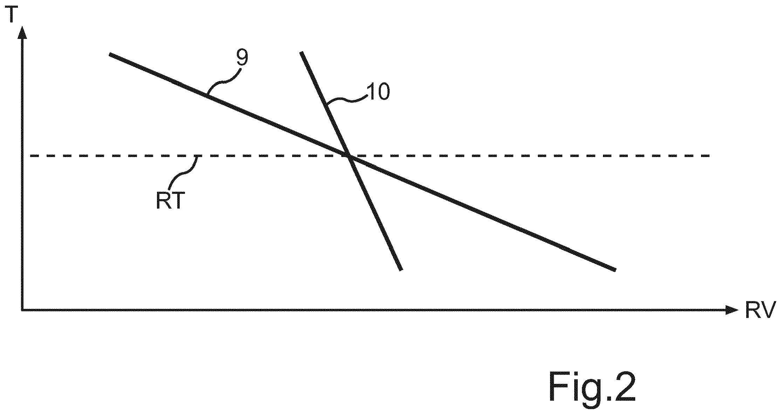

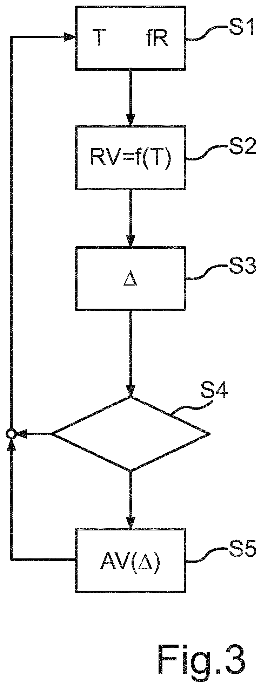

Bezug nehmend auf Fig. 3 startet das Verfahren in einem ersten Schritt S1, in welchem die Auswerteeinrichtung 4 die aktuelle Temperatur T und die aktuelle Resonanzfrequenz fR des Ultraschallsensors 3 empfängt. In einem weiteren Schritt S2 ermittelt die Auswerteeinrichtung 4 abhängig von der aktuellen Temperatur T einen Referenzwert RV. Bei dem temperaturabhängigen Referenzwert RV handelt es sich dabei um eine theoretische Resonanzfrequenz des Ultraschallsensors 3, welche sich theoretisch bei der aktuellen Temperatur T einstellen soll. Die Abhängigkeit der theoretischen Resonanzfrequenz und somit des Referenzwerts RV von der aktuellen Temperatur T kann beispielsweise als mathematische Formel oder aber als eine Look-Up-Tabelle in der Auswerteeinrichtung 4 hinterlegt sein und dient dann zur Ermittlung des Referenzwerts RV im Betrieb. Eine beispielhafte Abhängigkeit der theoretischen Resonanzfrequenz und somit des Referenzwerts RV von der aktuellen Temperatur T ist in Fig. 2 gezeigt, wobei die Raumtemperatur mit RT bezeichnet ist. In Fig. 2 sind dabei zwei Verläufe gezeigt, nämlich eine erste lineare Abhängigkeit 9 für den verdeckten Einbau des Ultraschallsensors 3 hinter dem Stoßfänger 5, 6 sowie eine zweite lineare Abhängigkeit 10 für den herkömmlichen Einbau des Ultraschallsensors 3 in einer durchgängigen Aussparung des Stoßfängers 5, 6. Die Abhängigkeit der theoretischen Resonanzfrequenz RV von der Temperatur T ist besonders signifikant, wenn der Ultraschallsensor 3 mit seiner Membran verdeckt hinter dem Stoßfänger 5, 6 montiert ist, insbesondere einem Stoßfänger aus Kunststoff.

Mit erneutem Bezug auf Fig. 3 wird in einem weiteren Schritt S3 eine Abweichung Δ der gemessenen aktuellen Resonanzfrequenz fR von dem Referenzwert RV ermittelt. Als Abweichung Δ kann dabei beispielsweise eine Differenz berechnet und dann ins Verhältnis mit dem Referenzwert RV gesetzt werden, sodass die Abweichung Δ als Prozentsatz berechnet wird. In einem weiteren Schritt S4 kann die Auswerteeinrichtung 4 überprüfen, ob eine ausreichende Anzahl von Messungen bzw. von Abweichungen Δ vorliegt oder nicht. Ist dies nicht der Fall, so kehrt das Verfahren zum Schritt S1 zurück. Sonst wird gemäß Schritt S5 aus einer Vielzahl von Abweichungen Δ und somit anhand von mehreren Messungen ein Mittelwert AV der Abweichungen Δ berechnet. Dieser Mittelwert AV dient dann zur endgültigen Beurteilung, ob der Ultraschallsensor 3 blockiert ist oder nicht.

Grundsätzlich kann zunächst eine binäre Entscheidung getroffen werden, ob der Ultraschallsensor 3 blockiert ist oder nicht. Dies kann beispielsweise so vorgenommen werden, dass durch die Auswerteeinrichtung 4 überprüft wird, ob der Mittelwert AV in einem vorgegebenen Wertebereich um den Wert "0" liegt oder nicht. Liegt der Mittelwert AV in diesem Wertebereich um den Nullwert, so ist der Ultraschallsensor 3 nicht blockiert. Liegt der Mittelwert AV außerhalb dieses Wertebereichs, wird angenommen, dass der Ultraschallsensor 3 blockiert ist. Abhängig von dem Mittelwert AV kann weiterhin auch ein Ausmaß und/oder eine Art der Blockierung bestimmt werden, und es kann gegebenenfalls auch auf die Verringerung des Erfassungsbereichs bzw. Detektionsbereichs des Ultraschallsensors 3 zurückgeschlossen werden. Ein Beispiel zeigt die folgende Tabelle:

| AV(Δ) | Mögliche Verschmutzungsart | Verringerung des Erfassungsbereichs |
|---|---|---|
| -1%...-30% | Schnee | Verringerung Erfassungsbereich um 20% |
| -31%...-70% | dünne Schicht Eis | Verringerung Erfassungsbereich um 60% |
| -71%...-100% | dicke Schicht Eis | vollkommen blind |
| + 1%...+30% | Wasser | Verringerung Erfassungsbereich um 20% |
| +31%...+70% | dünne Schicht Matsch | Verringerung Erfassungsbereich um 60% |
| +71%...+100% | dicke Schicht Matsch | vollkommen blind |

Da die unterschiedlichen Fahrerassistenzsysteme 7a bis 7x auch unterschiedliche Erfassungsbereiche des Ultraschallsensors 3 benötigen, kann eine Bewertung der Verringerung des Erfassungsbereichs für jedes Fahrerassistenzsystem 7a bis 7x separat erfolgen. Dabei kann beispielsweise für jedes Fahrerassistenzsystem 7a bis 7x separat entschieden werden, ob eine Warnmeldung ausgegeben und/oder das jeweilige Fahrerassistenzsystem 7a bis 7x abgeschaltet werden soll.

## Patentansprüche

1. Verfahren zum Erkennen eines blockierten Zustands eines Ultraschallsensors (3) eines Kraftfahrzeugs (1), wobei ein Istwert zumindest eines Schwingungsparameters (fR) des Ultraschallsensors (3) erfasst und zum Erkennen des blockierten Zustands mittels einer Auswerteeinrichtung (4) mit einem Referenzwert (RV) verglichen wird,
wobei mittels einer Temperaturerfassungseinrichtung (8) eine aktuelle Temperatur (T) erfasst wird, welcher der Ultraschallsensor (3) ausgesetzt ist,
wobei der Referenzwert (RV) mittels der Auswerteeinrichtung (4) abhängig von der aktuellen Temperatur (T) bestimmt wird, wobei der Vergleich zwischen dem jeweils aktuellen Istwert des Schwingungsparameters (fR) und dem jeweils aktuellen Referenzwert (RV) wiederholt durchgeführt wird,
**dadurch gekennzeichnet, dass** aus Vergleichsergebnissen (Δ) ein Mittelwert (AV) bestimmt und zum Erkennen des blockierten Zustands ausgewertet wird, und dass
bei detektieren eines blockierten Zustands des Ultraschallsensors abhängig von dem Vergleich ein Ausmaß und/oder eine Art der Blockierung des Ultraschallsensors (3) bestimmt wird, wobei eine Abweichung zwischen dem Istwert des Schwingungsparameters (fR) einerseits und dem aktuellen Referenzwert (RV) andererseits bestimmt und als direkter Indikator für eine Stärke und/oder die Art der Blockierung genutzt wird.

2. Verfahren nach Anspruch 1,
**dadurch gekennzeichnet, dass**
die aktuelle Temperatur (T) mittels eines an und/oder in dem Ultraschallsensor (3) angeordneten Temperatursensors der Temperaturerfassungseinrichtung (8) erfasst wird.

3. Verfahren nach Anspruch 1,
**dadurch gekennzeichnet, dass**
als Temperatur (T) eine aktuelle Umgebungstemperatur des Ultraschallsensors (3) mittels eines im Bereich des Ultraschallsensors (3) angeordneten Temperatursensors der Temperaturerfassungseinrichtung (8) erfasst wird.

4. Verfahren nach einem der vorhergehenden Ansprüche,
**dadurch gekennzeichnet, dass**
der Istwert einer Resonanzfrequenz (fR) des Ultraschallsensors (3) als Schwingungsparameter (fR) erfasst wird und als Referenzwert (RV) für die Resonanzfrequenz ein Sollwert der Resonanzfrequenz abhängig von der aktuellen Temperatur (T) bestimmt wird.

5. Verfahren nach einem der vorhergehenden Ansprüche,
**dadurch gekennzeichnet, dass**
der Istwert einer Ausschwingzeit einer Membran des Ultraschallsensors (3) als Schwingungsparameter (fR) erfasst wird und als Referenzwert (RV) für die Ausschwingzeit ein Sollwert der Ausschwingzeit abhängig von der aktuellen Temperatur (T) bestimmt wird.

6. Verfahren nach einem der vorhergehenden Ansprüche ,
**dadurch gekennzeichnet, dass**
abhängig von dem Vergleich eine durch die Blockierung verursachte Verringerung eines Erfassungsbereichs des Ultraschallsensors (3) bestimmt wird.

7. Verfahren nach einem der vorhergehenden Ansprüche,
**dadurch gekennzeichnet, dass**
zumindest zwei Ultraschallsensoren (3) des Kraftfahrzeugs (1) jeweils auf den blockierten Zustand hin überprüft werden und die aktuelle Temperatur (T) separat für jeden Ultraschallsensor (3) erfasst wird und der Referenzwert (RV) separat für jeden Ultraschallsensor (3) abhängig von der jeweiligen Temperatur (T) bestimmt wird.

8. Ultraschallsensorvorrichtung (2) für ein Kraftfahrzeug (1), mit zumindest einem Ultraschallsensor (3) und mit einer Auswerteeinrichtung (4), welche dazu ausgelegt ist, einen Istwert zumindest eines Schwingungsparameters (fR) des Ultraschallsensors (3) zu erfassen, mit einem Referenzwert (RV) zu vergleichen und abhängig von dem Vergleich einen blockierten Zustand des Ultraschallsensors (3) zu erkennen,
wobei die Auswerteeinrichtung (4) dazu ausgelegt ist, den Referenzwert (RV) abhängig von einer erfassten aktuellen Temperatur (T), welcher der Ultraschallsensor (3) ausgesetzt ist, im Betrieb zu bestimmen, und den Vergleich zwischen dem jeweils aktuellen Istwert des Schwingungsparameters (fR) und dem jeweils aktuellen Referenzwert (RV) wiederholt durchzuführen,
**dadurch gekennzeichnet, dass** die Auswerteeinrichtung (4) dazu ausgelegt ist aus Vergleichsergebnissen (Δ) einen Mittelwert (AV) zu bestimmen und zum Erkennen des blockierten Zustands auszuwerten, und bei detektieren eines blockierten Zustands des Ultraschallsensors abhängig von dem Vergleich ein Ausmaß und/oder eine Art der Blockierung des Ultraschallsensors (3) zu bestimmen, wobei eine Abweichung zwischen dem Istwert des Schwingungsparameters (fR) einerseits und dem aktuellen Referenzwert (RV) andererseits bestimmt wird und als direkten Indikator für eine Stärke und/oder die Art der Blockierung genutzt wird.

9. Kraftfahrzeug (1) mit einer Ultraschallsensorvorrichtung (2) nach Anspruch 8.

## Claims

1. Method for detecting a blocked state of a ultrasonic sensor (3) of a motor vehicle (1), wherein an actual value of at least one oscillation parameter (fR) of the ultrasonic sensor (3) is acquired and is compared with a reference value (RV) by means of an evaluation apparatus (4) in order to detect a blocked state,
wherein a current temperature (T), to which the ultrasonic sensor (3) is subjected, is sensed by means of a temperature-sensing apparatus (8), wherein the reference value (RV) is determined by means of the evaluation apparatus (4) as a function of the current temperature (T),
wherein the comparison between the respective current value of the oscillation parameter (fR) and the respective current reference value (RV) is carried out repeatedly,
**characterized in that** a mean value (AV) is determined from comparison results (Δ) and is evaluated in order to detect the blocked state, and **in that** when a blocked state of the ultrasonic sensor is detected, an extent and/or a type of blockage of the ultrasonic sensor (3) is determined as a function of the comparison, wherein a deviation between the actual value of the oscillation parameter (fR), on the one hand, and the current reference value (RV), on the other, is determined and is used as a direct indicator of a magnitude and/or the type of the blockage.

2. Method according to Claim 1,
**characterized in that**
the current temperature (T) is sensed by means of a temperature sensor, arranged on and/or in the ultrasonic sensor (3), of the temperature-sensing apparatus (8).

3. Method according to Claim 1,
**characterized in that**
a current ambient temperature of the ultrasonic sensor (3) is sensed as the temperature (T) by means of a temperature sensor, arranged in the region of the ultrasonic sensor (3), of the temperature-sensing apparatus (8).

4. Method according to one of the preceding claims,
**characterized in that**
the actual value of a resonance frequency (fR) of the ultrasonic sensor (3) is acquired as an oscillation parameter (fR), and a setpoint value of the resonance frequency is determined as a reference value (RV) for the resonance frequency as a function of the current temperature (T).

5. Method according to one of the preceding claims,
**characterized in that**
the actual value of a decay time of a diaphragm of the ultrasonic sensor (3) is acquired as an oscillation parameter (fR), and a setpoint value of the decay time is determined as a reference value (RV) for the decay time as a function of the current temperature (T).

6. Method according to one of the preceding claims,
**characterized in that**
a reduction in a sensing range of the ultrasonic sensor (3), which is caused by the blockage, is determined as a function of the comparison.

7. Method according to one of the preceding claims,
**characterized in that**
at least two ultrasonic sensors (3) of the motor vehicle (1) are each checked for the blocked state, and the current temperature (T) is sensed separately for each ultrasonic sensor (3), and the reference value (RV) is determined separately for each ultrasonic sensor (3) as a function of the respective temperature (T).

8. Ultrasonic sensor device (2) for a motor vehicle (1), having at least one ultrasonic sensor (3) and having an evaluation apparatus (4) which is configured to acquire an actual value of at least one oscillation parameter (fR) of the ultrasonic sensor (3), compare it with a reference value (RV) and detect a blocked state of the ultrasonic sensor (3) as a function of the comparison,
wherein the evaluation apparatus (4) is configured to determine the reference value (RV) during operation as a function of a sensed current temperature (T) to which the ultrasonic sensor (3) is subjected, and to carry out the comparison between the respective current actual value of the oscillation parameter (fR) and the respective current reference value (RV) repeatedly,
**characterized in that** the evaluation apparatus (4) is configured to determine a mean value (AV) from the comparison results (Δ) and to evaluate it in order to detect the blocked state, and when a blocked state of the ultrasonic sensor is detected, to determine an extent and/or a type of the blockage of the ultrasonic sensor (3) as a function of the comparison, wherein a deviation between the actual value of the oscillation parameter (fR), on the one hand, and the current reference value (RV), on the other, is determined and used as a direct indicator of a magnitude and/or the type of the blockage.

9. Motor vehicle (1) having an ultrasonic sensor device (2) according to Claim 8.

## Revendications

1. Procédé de reconnaissance d'un état bloqué d'un capteur à ultrasons (3) d'un véhicule automobile (1), une valeur réelle d'au moins un paramètre d'oscillation (fR) du capteur à ultrasons (3) étant acquise et comparée à une valeur de référence (RV) au moyen d'un dispositif d'interprétation (4) en vue de reconnaître l'état bloqué, une température actuelle (T), à laquelle est exposé le capteur à ultrasons (3), étant acquise au moyen d'un dispositif de détection de température (8),
la valeur de référence (RV) étant déterminée au moyen du dispositif d'interprétation (4) en fonction de la température actuelle (T), la comparaison entre la valeur réelle respectivement actuelle du paramètre d'oscillation (fR) et la valeur de référence (RV) respectivement actuelle étant effectuée de manière répétitive,
**caractérisé en ce qu'**une valeur moyenne (AV) est déterminée à partir des résultats de comparaison (Δ) et interprétée en vue de reconnaître l'état bloqué, et **en ce qu'**en cas de détection d'un état bloqué du capteur à ultrasons, une étendue et/ou une nature du blocage du capteur à ultrasons (3) est déterminée en fonction de la comparaison, un écart entre la valeur réelle du paramètre d'oscillation (fR) d'une part et la valeur de référence (RV) actuelle d'autre part étant déterminé et utilisé comme indicateur direct d'une intensité et/ou de la nature du blocage.

2. Procédé selon la revendication 1, **caractérisé en ce que** la température actuelle (T) est détectée au moyen d'une sonde de température du dispositif de détection de température (8) disposée sur et/ou dans le capteur à ultrasons (3).

3. Procédé selon la revendication 1, **caractérisé en ce que** la température actuelle (T) est une température ambiante actuelle du capteur à ultrasons (3) détectée au moyen d'une sonde de température du dispositif de détection de température (8) disposée dans la zone du capteur à ultrasons (3).

4. Procédé selon l'une des revendications précédentes, **caractérisé en ce que** la valeur réelle d'une fréquence de résonance (fR) du capteur à ultrasons (3) est acquise en tant que paramètre d'oscillation (fR) et une valeur de consigne de la fréquence de résonance est déterminée en fonction de la température actuelle (T) en tant que valeur de référence (RV) pour la fréquence de résonance.

5. Procédé selon l'une des revendications précédentes, **caractérisé en ce que** la valeur réelle d'un temps d'évanouissement des oscillations d'une membrane du capteur à ultrasons (3) est acquise en tant que paramètre d'oscillation (fR) et une valeur réelle du temps d'évanouissement des oscillations est déterminée en fonction de la température actuelle (T) en tant que valeur de référence (RV) pour le temps d'évanouissement des oscillations.

6. Procédé selon l'une des revendications précédentes, **caractérisé en ce qu'**une réduction d'une plage de balayage du capteur à ultrasons (3) provoquée par le blocage est déterminée en fonction de la comparaison.

7. Procédé selon l'une des revendications précédentes, **caractérisé en ce qu'**au moins deux capteurs à ultrasons (3) du véhicule automobile (1) font respectivement l'objet d'une vérification de la présence de l'état bloqué et la température actuelle (T) est acquise séparément pour chaque capteur à ultrasons (3) et la valeur de référence (RV) est déterminée séparément pour chaque capteur à ultrasons (3) en fonction de la température (T) respective.

8. Arrangement de détection à ultrasons (2) pour un véhicule automobile (1), comprenant au moins un capteur à ultrasons (3) et comprenant un dispositif d'interprétation (4) qui est conçu pour acquérir une valeur réelle d'au moins un paramètre d'oscillation (fR) du capteur à ultrasons (3), la comparer à une valeur de référence (RV) et reconnaître un état bloqué du capteur à ultrasons (3) en fonction de la comparaison,
le dispositif d'interprétation (4) étant conçu pour déterminer la valeur de référence (RV) en fonction d'une température actuelle (T) acquise lors du fonctionnement et effectuer la comparaison entre la valeur réelle respectivement actuelle du paramètre d'oscillation (fR) et la valeur de référence (RV) respectivement actuelle de manière répétitive,
**caractérisé en ce que** le dispositif d'interprétation (4) est conçu pour déterminer une valeur moyenne (AV) à partir des résultats de comparaison (Δ) et l'interpréter en vue de reconnaître l'état bloqué et, en cas de détection d'un état bloqué du capteur à ultrasons, pour déterminer une étendue et/ou une nature du blocage du capteur à ultrasons (3) en fonction de la comparaison, un écart entre la valeur réelle du paramètre d'oscillation (fR) d'une part et la valeur de référence (RV) actuelle d'autre part étant déterminé et utilisé comme indicateur direct d'une intensité et/ou de la nature du blocage.

9. Véhicule automobile (1) équipé d'un arrangement de détection à ultrasons (2) selon la revendication 8.
